# EUROPÄISCHE PATENTSCHRIFT

(11) **EP 3 631 587 B1**
(45) Veröffentlichungstag und Bekanntmachung des Hinweises auf die Patenterteilung: **28.04.2021**
(21) Anmeldenummer: 18740082.5
(22) Anmeldetag: 28.05.2018
(51) Int. Cl.: G05B 19/042, G05B 19/4063, G05B 23/02

(54) **VERFAHREN ZUM BETREIBEN EINER FERTIGUNGSANLAGE UND FERTIGUNGSANLAGE**
METHOD FOR OPERATING A PRODUCTION PLANT AND PRODUCTION PLANT
PROCÉDÉ DE FONCTIONNEMENT D'UNE INSTALLATION DE PRODUCTION ET INSTALLATION DE PRODUCTION

(30) Priorität: 01.06.2017 AT 504622017
(43) Veröffentlichungstag der Anmeldung: 08.04.2020
(73) Patentinhaber: KEBA AG, 4041 Linz (AT)
(72) Erfinder: FISCHER, Harald, 5323 Ebenau (AT); PETRUZELKA, Michael, 4048 Puchenau (AT); STUMMER, Heinz, 4840 Vöcklabruck (AT); WEILGUNY, Günther, 4030 Linz (AT); KOBLER, Thomas, 4122 Arnreit (AT)
(74) Vertreter: Burger, Hannes
(86) Internationale Anmeldenummer: PCT/AT2018/060108
(87) Internationale Veröffentlichungsnummer: WO 2018/218265

(56) Entgegenhaltungen:
- EP-A1- 2 865 935
- WO-A1-2016/119258
- WO-A1-2016/160758
- DE-A1-102015 013 147
- US-A1- 2013 024 542

## Beschreibung

Die Erfindung betrifft ein Verfahren zum Betreiben einer Fertigungsanlage mit zumindest zwei Fertigungsmaschinen, sowie den Aufbau der Fertigungsanlage.

Die DE 10 2015 013147 A1 offenbart ein Maschinenbedienungsassistenzsystem. Es hat zumindest eine auf zumindest einem von zumindest einem Benutzer mitgeführten Mobilgerät anzeigbare Mensch-Maschine-Schnittstelle zur Ein- und/oder Ausgabe von Maschinendaten, welche vorzugsweise eine auf dem Bildschirm des jeweiligen Mobilgeräts anzeigbare graphische Oberfläche aufweist, und eine auf oder im Zusammenwirken mit jedem der Mobilgeräte ausführbare Steuerung.

Die US 2013/024542 A1 offenbart ebenfalls ein Maschinenbediensystem.

Aus dem Stand der Technik sind Fertigungsanlagen bekannt, in welchen mehrere Fertigungsmaschinen angeordnet sind. Jede der Fertigungsmaschinen weist eine Funktionssteuerung auf, die zur Steuerung der Fertigungsmaschine dient. Zusätzlich weist jede der Fertigungsmaschinen ein Eingabeterminal und ein Anzeigedisplay auf. Mittels einem an der Fertigungsmaschine angeordneten Rechner wird eine visuelle Darstellung der Funktionszustände der Fertigungsmaschine berechnet und am Anzeigedisplay der Fertigungsmaschine dargestellt.

Die aus dem Stand der Technik bekannten Fertigungsanlagen weisen den Nachteil auf, dass die Fertigungsmaschinen in der Fertigungsanlage aufgrund dem Vorhandensein einer Vielzahl von Rechnern und Anzeigedisplays wartungsintensiv, fehleranfällig und teuer sind. Darüber hinaus müssen die Rechner aufgrund der Wärmeentwicklung in den Fertigungsmaschinen aufwändig gekühlt werden, beziehungsweise müssen Rechner verwendet werden, welche einen industrietauglichen Aufbau aufweisen.

Aufgabe der vorliegenden Erfindung war es, die Nachteile des Standes der Technik zu überwinden und eine Fertigungsanlage bzw. ein Verfahren zum Betreiben einer Fertigungsanlage zur Verfügung zu stellen, welche einen möglichst einfachen Aufbau aufweist.

Diese Aufgabe wird durch eine Fertigungsanlage und ein Verfahren zum Betreiben der Fertigungsanlage gemäß den Ansprüchen gelöst.

Erfindungsgemäß ist ein Verfahren zum Betreiben einer Fertigungsanlage vorgesehen. Die Fertigungsanlage weist zumindest zwei Fertigungsmaschinen mit jeweils einer Funktionssteuerung; zumindest einen zentralen Rechner, der mit der Funktionssteuerung zur Datenübertragung gekoppelt ist; zumindest eine Sendestation zum Bereitstellen eines Drahtlosnetzwerkes in der Fertigungsanlage, wobei die Sendestation mit dem zumindest einen zentralen Rechner zur Datenübertragung gekoppelt ist; zumindest ein mobiles Anzeigegerät mit einem Display und einer Empfangsvorrichtung zum Empfang von Daten aus dem Drahtlosnetzwerk und zur grafischen Darstellung der empfangenen Daten auf.

Das Verfahren weist die folgenden Verfahrensschritte auf:
- von den Funktionssteuerungen der Fertigungsmaschinen werden Zustandsinformationen über die Fertigungsmaschinen an den zentralen Rechner übertragen;
- eine Nahposition eines mobilen Anzeigegerätes zu einer der Fertigungsmaschinen wird detektiert, wodurch dieses mobile Anzeigegerät zumindest temporär einer der Fertigungsmaschinen zugeordnet wird;
- der zentrale Rechner errechnet auf Basis der Zustandsinformationen über die Fertigungsmaschinen zumindest für jene Fertigungsmaschine, der ein mobiles Anzeigegerät zugeordnet ist, eine grafische Darstellung der Zustandsinformationen dieser Fertigungsmaschine;
- die Daten der grafischen Darstellung der Zustandsinformationen werden mittels dem Drahtlosnetzwerk an das mobile Anzeigegerät übertragen, welches der Fertigungsmaschine zugeordnet ist, und am Display des mobilen Anzeigegerätes dargestellt, sodass die grafische Darstellung von einem Maschinenbediener abgelesen werden kann.

Von Vorteil am erfindungsgemäßen Verfahren ist, dass die Rechenleistung zur Berechnung der Visualisierung der Zustandsinformationen einer Fertigungsmaschine nicht direkt an der Fertigungsmaschine durchgeführt wird, sondern dass örtlich getrennt von der Fertigungsmaschine in einem zentralen Rechner die Rechenaufgaben zur Visualisierung für mehrere Fertigungsmaschinen durchgeführt werden. Somit können die Fertigungsmaschinen einen einfacheren Aufbau aufweisen, da nicht an jeder Fertigungsmaschine ein eigener Rechner notwendig ist. Dadurch wird erreicht, dass die Fertigungsmaschinen wenig fehleranfällig und günstig in der Herstellung sind. Darüber hinaus wird nicht für jede einzelne Fertigungsmaschine ein eigenes Anzeigegerät benötigt, sondern können mit ein und demselben Anzeigegerät mehrere der Fertigungsmaschinen gekoppelt werden, wodurch auch die Anzahl an notwendigen Anzeigegeräten vermindert werden kann. Insgesamt kann somit der Ressourcenaufwand in der Fertigungsanlage bzw. der Energieverbrauch beim Betrieb der Fertigungsanlage möglichst gering gehalten werden. Der zentrale Rechner kann beim erfindungsgemäßen Betrieb der Fertigungsanlage darüber hinaus in einem klimatisierten Serverraum untergebracht werden, wo er zum einen gekühlt und darüber hinaus vor Umgebungseinflüssen geschützt werden kann. Darüber hinaus braucht der zentrale Rechner kein teurer Industrierechner sein, wie dies der Fall bei herkömmlichen Fertigungsmaschinen ist, sondern kann ein handelsüblicher PC verwendet werden.

Weiters kann es zweckmäßig sein, wenn die Nahposition des mobilen Anzeigegerätes zu einer der Fertigungsmaschinen mittels einem Näherungssensor oder einem Datenübertragungsmittel mit begrenzter Reichweite, detektiert wird, wobei die Fertigungsmaschinen ein entsprechendes Nähedetektionsmittel und die mobilen Anzeigegeräte ein entsprechendes Nähedetektionsmittel aufweisen. Von Vorteil ist hierbei, dass durch diese Maßnahme das mobile Anzeigegerät eindeutig der Fertigungsmaschine zugeordnet werden kann und somit nur mit Visualisierungsdaten über die Fertigungsmaschine versorgt wird, wenn sich das mobile Anzeigegerät im Wirkbereich der zugeordneten Fertigungsmaschine befindet. Dies ist besonders wichtig, um die Maschinensicherheit nicht zu beeinträchtigen.

Ferner kann vorgesehen sein, dass das Nähedetektionsmittel an der Fertigungsmaschine in Form eines Near Field Communication (NFC) - Sender ausgebildet ist und dass durch Ermittlung der Signalstärke des am mobilen Anzeigegerätes empfangenen Signals ein Abstand des mobilen Anzeigegerätes zum Nähedetektionsmittel erfasst wird. Von Vorteil ist hierbei, dass derartige NFC-Sender eine nur begrenzte Reichweite aufweisen und somit sichergestellt ist, dass das mobile Anzeigegerät nur dann mit der Fertigungsmaschine gekoppelt ist, wenn es sich auch im Nahbereich der Fertigungsmaschine befindet.

Alternativ dazu kann vorgesehen sein, dass das Nähedetektionsmittel an der Fertigungsmaschine in Form eines Bluetooth - Beacons, wie etwa eines Bluetooth Low Energy (BLE) - Beacons ausgebildet ist und dass durch Ermittlung der Signalstärke des am mobilen Anzeigegerätes empfangenen Signals ein Abstand des mobilen Anzeigegerätes zum Nähedetektionsmittel erfasst wird. Von Vorteil ist hierbei, dass ein derartiges Bluetooth - Beacon billig in der Anschaffung ist, und darüber hinaus eine genaue Bestimmung des Abstandes zwischen der Fertigungsmaschine und dem mobilen Anzeigegerät ermöglicht wird.

Vorteilhaft ist auch eine Ausprägung, gemäß welcher vorgesehen sein kann, dass an jeder der Fertigungsmaschinen ein Nähedetektionsmittel in Form eines Near Field Communication (NFC) - Senders oder in Form eines Bluetooth - Beacons angeordnet ist und dass das mobile Anzeigegerät jener Fertigungsmaschine zugeordnet wird, bei welcher das stärkste Signal zum mobilen Anzeigegerät detektiert wird. Durch diese Maßnahme kann erreicht werden, dass das mobile Anzeigegerät auch mit großer Sicherheit der richtigen Fertigungsmaschine zugeordnet wird.

In einer weiteren Alternativvariante kann vorgesehen sein, dass die Positionsbestimmung des mobilen Anzeigegerätes unter Verwendung der Sendestationen, beispielsweise des WLAN, erfolgt. Mittels der Auswertung der Signalstärke von verschiedenen Sendestationen kann somit ebenfalls die absolute Position des mobilen Anzeigegerätes in der Fertigungsanlage bestimmt werden.

Gemäß einer Weiterbildung ist es möglich, dass vom Maschinenbediener, mittels einem der Fertigungsmaschine zugeordneten Eingabegerät, Steuerungsbefehle in die Funktionssteuerung eingegeben werden, wobei die Auswirkungen der eingegebenen Steuerungsbefehle in Echtzeit am mobilen Anzeigegerät dargestellt werden. Durch diese Maßnahme kann die Fertigungsmaschine mittels dem Eingabegerät gesteuert werden und mittels dem mobilen Anzeigegerät können die eingegebenen Steuerbefehle visualisiert werden. Dadurch, dass die Visualisierung auf das mobile Anzeigegerät ausgelagert ist, braucht das Eingabegerät nicht mit einem Display ausgestattet sein, beziehungsweise genügt eine einfache Anzeige.

Erfindungsgemäß werden bei dem Verfahren, bei der Zuordnung eines mobilen Anzeigegerätes zu einer der Fertigungsmaschinen, Informationen über das mobile Anzeigegerät abgefragt und dem zentralen Rechner übermittelt, wobei insbesondere die Displaygröße und die Auflösung des Displays, sowie das Vorhandensein von Steuerelementen, wie etwa einem Notaustaster und/oder Zustimmtaster, abgefragt werden, wobei der zentrale Rechner auf Basis dieser ermittelten Anzeigegeräte-Information eine auf das mobile Anzeigegerät angepasste grafische Darstellung ausgibt. Von Vorteil ist hierbei, dass durch diese Maßnahme verschiedene mobile Anzeigegeräte zum Einsatz kommen können und die Informationen zur Visualisierung genau auf die Art des mobilen Anzeigegerätes zurecht geschnitten sind.

Darüber hinaus kann vorgesehen sein, dass der Maschinenbediener am mobilen Anzeigegerät angemeldet bzw. identifiziert ist und dass bei der Zuordnung eines mobilen Anzeigegerätes zu einer der Fertigungsmaschinen Informationen über den Maschinenbediener abgefragt und dem zentralen Rechner übermittelt werden, wobei der zentrale Rechner auf Basis der Identifizierung des Maschinenbedieners eine auf das mobile Anzeigegerät angepasste grafische Darstellung ausgibt. Von Vorteil ist hierbei, dass durch diese Maßnahme verschiedene Berechtigungsstufen für verschiedene Maschinenbediener vergeben werden können. Somit können sicherheitsrelevante Steuerbefehle bzw. sicherheitsrelevante Einstellmöglichkeiten einem beschränkten Kreis von Maschinenbedienern vorbehalten bleiben. Durch diese Maßnahme kann darüber hinaus erreicht werden, dass bestimmte Personengruppen nur allgemeine Zustandsdaten über die Fertigungsmaschinen sehen und dass beispielsweise Detaileinstellungen nicht abgerufen werden können.

Weiters kann vorgesehen sein, dass bei Vorhandensein von bestimmten Steuerelementen am mobilen Anzeigegerät, dieses auch zur Übertragung von Steuerinformationen an die Funktionssteuerung der Fertigungsmaschine dient. Von Vorteil ist hierbei, dass das mobile Anzeigegerät somit nicht nur zum Anzeigen der Maschinendaten dienen kann, sondern gleichzeitig auch als Eingabeterminal zur Befehlseingabe in die Fertigungsmaschine dienen kann. Insbesondere kann vorgesehen sein, dass das mobile Anzeigegerät zum Ändern von Grundeinstellungen in der Fertigungsmaschine dienen kann. Weiters kann ein derartiges mobiles Anzeigegrät mit Steuerelementen auch zur Eingabe von Verfahrbefehlen an der Fertigungsmaschine verwendet werden.

Gemäß einer besonderen Ausprägung ist es möglich, dass die Steuerinformationen mittels dem Datenübertragungsmittel mit begrenzter Reichweite direkt vom mobilen Anzeigegerät auf die Fertigungsmaschineübertragen werden. Durch diese Maßnahme kann erreicht werden, dass die Daten auf möglichst kurzem Weg und in Echtzeit vom mobilen Anzeigegerät auf die Fertigungsmaschine übertragen werden. Darüber hinaus kann durch diese Maßnahme gewährleistet werden, dass der Maschinenbediener die Fertigungsmaschine nur dann steuern kann, wenn er sich auch im Wirkbereich innerhalb der Fertigungsmaschine befindet. Würde sich der Maschinenbediener außerhalb des Wirkbereiches befinden, wäre die Datenübertragung nicht möglich, da das Datenübertragungsmittel mit begrenzter Reichweite keinen Empfang aufweist. Dadurch kann die Sicherheit der Fertigungsanlage weiter erhöht werden, da sichergestellt werden kann, dass der Maschinenbediener nicht unbeabsichtigt eine Fertigungsmaschine steuert, in dessen Nähe er nicht ist.

Entsprechend einer vorteilhaften Weiterbildung kann vorgesehen sein, dass in dem zumindest einen zentralen Rechner die grafische Darstellung der Zustandsinformationen von nur jenen Fertigungsmaschinen errechnet wird, welchen zu diesem Zeitpunkt ein mobiles Anzeigegerät zur Darstellung der Zustandsinformationen zugeordnet ist. Von Vorteil ist hierbei, dass durch diese Maßnahme einerseits Rechenleistung eingespart werden kann und darüber hinaus auch Energie beim Betrieb der Fertigungsanlage eingespart werden kann. Somit ist es beispielsweise möglich, dass bei einer Fertigungsanlage mit 100 Fertigungsmaschinen nur 10 mobile Anzeigegeräte verwendet werden und dementsprechend auch nur für 10 der gerade mit einem mobilen Anzeigegerät gekoppelten Fertigungsmaschinen die Visualisierung der Daten der Fertigungsmaschine zur Darstellung an den mobilen Anzeigegeräten berechnet werden muss.

Insbesondere kann es vorteilhaft sein, wenn das Display des mobilen Anzeigegerätes ein Touch-Display ist auf welchem Eingabebuttons dargestellt werden, wobei bei Betätigen eines der Eingabebuttons mittels dem Drahtlosnetzwerk ein Befehl von dem mobilen Anzeigegerät auf den zentralen Rechner übertragen wird und die grafische Darstellung der Zustandsinformationen über die Fertigungsmaschine angepasst wird, wodurch beispielsweise Untermenüs geöffnet werden können oder die Darstellung geändert werden kann. Durch diese Maßnahme kann erreicht werden, dass am mobilen Anzeigegerät nicht nur Daten angezeigt werden können, welche vorkonfiguriert in deren Darstellung vom zentralen Rechner bereitgestellt werden, sondern dass es dem Maschinenbediener auch möglich ist, zwischen verschiedenen Darstellungen zu wechseln bzw. die für ihn relevanten Daten anzeigen zu lassen.

Ferner kann vorgesehen sein, dass die Rechenleistung des zentralen Rechners priorisiert zur Berechnung der grafischen Darstellung der Zustandsinformationen der Fertigungsmaschinen verwendet wird und dass bei überschüssiger Rechenleistung der zentrale Rechner auch für andere Rechenaufgaben herangezogen wird. Von Vorteil an dieser Maßnahme ist, dass sichergestellt wird, dass der zentrale Rechner seine Hauptaufgabe der Visualisierung der Zustandsinformationen der Fertigungsmaschinen ausführt. Nebenbei kann durch diese Maßnahme der zentrale Rechner auch noch für weitere Rechenaufgaben verwendet werden, wodurch die Auslastung des zentralen Rechners optimiert werden kann. In einer bevorzugten Ausführungsform ist der zentrale Rechner hierbei so ausgelegt, dass er die Rechenaufgaben zur Visualisierung bei einer maximal möglichen Anzahl an mobilen Anzeigegeräten berechnen kann.

Darüber hinaus kann vorgesehen sein, dass die Zustandsinformationen über die Fertigungsmaschinen in festgelegten Zeitintervallen an den zentralen Rechner übertragen werden. Von Vorteil ist hierbei, dass durch diese Maßnahme die Visualisierung der Zustandsinformationen der Fertigungsmaschine in einem definierten Intervall abgefragt bzw. angezeigt werden kann.

Erfindungsgemäß umfasst die Fertigungsanlage:
zumindest zwei Fertigungsmaschinen mit jeweils einer Funktionssteuerung;
zumindest einen zentralen Rechner, der mit der Funktionssteuerung zumindest zur einseitigen Datenübertragung gekoppelt ist;
zumindest eine Sendestation zum Bereitstellen eines Drahtlosnetzwerkes in der Fertigungsanlage, wobei die Sendestation mit dem zumindest einen zentralen Rechner zumindest zur einseitigen Datenübertragung gekoppelt ist;
zumindest ein mobiles Anzeigegerät mit einer Empfangsvorrichtung zum Empfang von Daten aus dem Drahtlosnetzwerk und zur grafischen Darstellung der empfangenen Daten. Das mobile Anzeigegerät und/oder die Fertigungsmaschinen weisen eine Zuordnungsvorrichtung auf, mittels welcher das mobile Anzeigegerät einer bestimmten Fertigungsmaschine zuordenbar ist.

Als zentraler Rechner im Sinne dieses Dokumentes wird nicht nur ein einzelner Rechner gesehen, sondern auch ein Netzwerkzusammenschluss von mehreren Rechnern. Der Kürze halber wird in diesem Dokument nur der Begriff zentraler Rechner verwendet, wobei sämtliche Rechner oder Zusammenschlüsse von Rechnern gemeint werden, welche zentral die Rechenaufgaben zur grafischen Darstellung der Daten von mehreren Fertigungsmaschinen verwendet werden.

Zum besseren Verständnis der Erfindung wird diese anhand der nachfolgenden Figuren näher erläutert.

Es zeigen jeweils in stark vereinfachter, schematischer Darstellung:

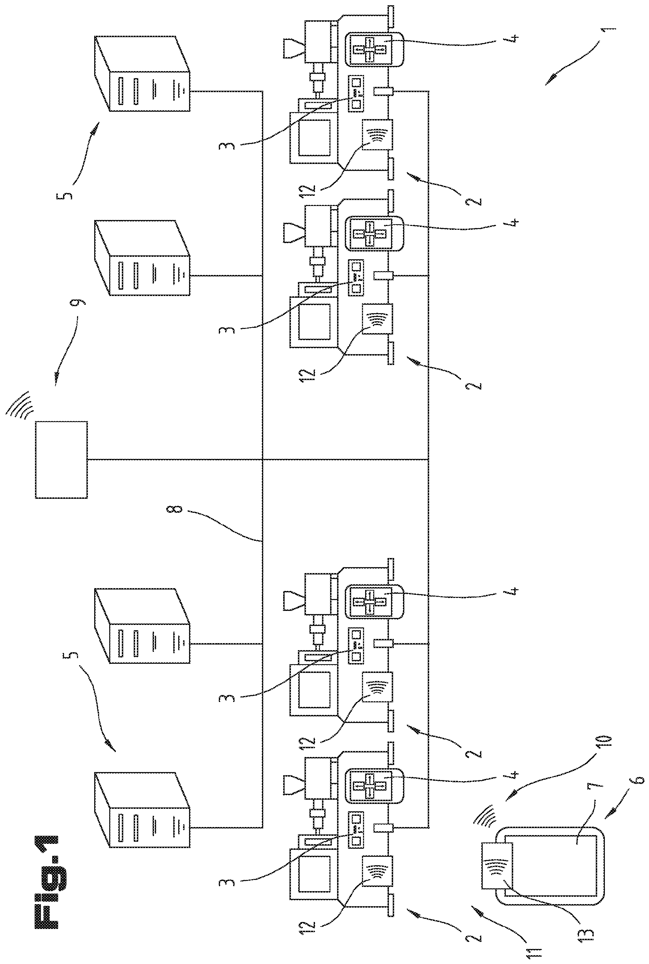

- Fig. 1: eine schematische Darstellung eines Ausführungsbeispiels des möglichen Aufbaues einer Fertigungsanlage.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Fig. 1 zeigt einen schematischen Aufbau einer Fertigungsanlage 1 mit mehreren Fertigungsmaschinen 2. Die Fertigungsanlage 1 kann beispielsweise in Form einer Maschinenhalle ausgebildet sein, in welcher die Fertigungsmaschinen 2 aufgestellt sind. Der Übersichtlichkeit halber sind nur vier Fertigungsmaschinen 2 dargestellt, wobei in der Fertigungsanlage 1 jedoch eine deutlich größere Anzahl von Fertigungsmaschinen vorhanden sein kann. Beispielsweise ist es denkbar, dass hundert Fertigungsmaschinen 2 oder mehr in der Fertigungsanlage 1 angeordnet sind.

Die Fertigungsmaschinen 2 können in Form von verschiedensten aus dem Stand der Technik bekannten Maschinen ausgebildet sein. Beispielsweise ist es denkbar, dass die Fertigungsmaschinen 2 beispielsweise in Form von Spritzgussmaschinen ausgebildet sein können. Die einzelnen Fertigungsmaschinen 2 weisen eine Funktionssteuerung 3 auf. Die Funktionssteuerung 3 kann beispielsweise für die direkte Ansteuerung der in der Fertigungsmaschine 2 ausgebildeten Aktoren dienen.

Außerdem kann die Funktionssteuerung 3 mit einem Eingabegerät 4 gekoppelt sein, welches zur Eingabe von Steuerbefehlen in die Funktionssteuerung 3 der Fertigungsmaschine 2 durch den Maschinenbediener dient. In seiner einfachsten Form kann das Eingabegerät 4 ausschließlich Funktionstasten umfassen, die zur Steuerung der Fertigungsmaschine 2 dienen. Darüber hinaus kann vorgesehen sein, dass das Eingabegerät 4 beispielsweise einen Not-Aus-Taster und/oder Zustimmtaster aufweist. Außerdem kann vorgesehen sein, dass das Eingabegerät 4 zumindest ein rudimentäres Anzeigeelement aufweist, in welchem diverse Zustände der Fertigungsmaschine 2 bzw. des Eingabegerätes 4 angezeigt werden können. Beispielsweise ist es denkbar, dass direkt im Bereich der Funktionstasten des Eingabegerätes eine Anzeige ausgebildet ist, aus welcher ersichtlich ist, ob die jeweilige Funktionstaste gerade gedrückt wird. Außerdem ist es auch denkbar, dass das Eingabegerät 4 ein vereinfachtes Display aufweist, in welchem Informationen über die Fertigungsmaschine 2 dargestellt werden können.

Weiters ist vorgesehen, dass die einzelnen Fertigungsmaschinen 2 zur Datenübertragung mit einem zentralen Rechner 5 gekoppelt sind. Die Koppelung der einzelnen Fertigungsmaschinen 2 mit dem zentralen Rechner 5 kann beispielsweise mittels einem kabelgebundenen dem Netzwerk 8 realisiert werden. Alternativ dazu ist es auch denkbar, dass die einzelnen Fertigungsmaschinen 2 mittels einem kabellosen Netzwerk 8 zur Datenübertragung mit dem zentralen Rechner 5 gekoppelt sind. Darüber hinaus können die einzelnen Fertigungsmaschinen 2 mittels dem Netzwerk 8 nicht nur mit dem zentralen Rechner 5 sondern auch untereinander zur Datenübertragung gekoppelt sein. Dies kann ebenfalls kabellos oder kabelgebunden realisiert sein.

Wie aus Fig. 1 ersichtlich, kann vorgesehen sein, dass der zentrale Rechner 5 durch mehrere Einzelrechner gebildet wird, welche zu einem Netzwerk zusammengeschlossen sind. Alternativ dazu ist es auch denkbar, dass der zentrale Rechner 5 durch einen einzelnen Rechner gebildet wird. Der zentrale Rechner 5 kann beispielsweise in einem eigenen klimatisierten Raum aufgestellt sein, in welchem er vor Überhitzung geschützt ist.

In einem ersten Ausführungsbeispiel kann vorgesehen sein, dass der zentrale Rechner 5 innerhalb der Fertigungsanlage 1 und daher innerhalb der Maschinenhalle angeordnet ist.

In einem weiteren Ausführungsbeispiel ist es auch denkbar, dass der zentrale Rechner 5 beispielsweise in der Cloud realisiert ist und die Rechenaufgaben somit dezentralisiert an verschiedenen über das Internet zusammengeschlossenen Rechnern vorgenommen werden.

Bei all diesen Ausführungsbeispielen wird in diesem Dokument, unabhängig von der tatsächlichen Anzahl an verwendeten Rechnern, immer vom zentralen Rechner gesprochen.

Der oder die zentralen Rechner 5 können beispielsweise in Form von herkömmlichen PCs ausgebildet sein.

Weiters sind mobile Anzeigegeräte 6 vorgesehen, welche zur Visualisierung der aktuellen Zustandsinformationen der Fertigungsmaschinen 2 dienen. Die mobilen Anzeigegeräte 6 weisen hierzu ein Display 7 auf, welches zur grafischen Anzeige der Zustandsinformationen dient. Die Zustandsinformationen werden hierbei mittels dem Netzwerk 8 von der Funktionssteuerung 3 der Fertigungsmaschine 2 auf den zentralen Rechner 5 übertragen. Im zentralen Rechner 5 werden die Zustandsinformationen verarbeitet und entsprechend hinterlegten Berechnungsprogrammen eine grafische Darstellung des aktuellen Zustandes der Fertigungsmaschinen 2 berechnet. Diese grafische Darstellung wird anschließend mit einer Sendestation 9, welche mit dem zentralen Rechner 5 gekoppelt ist, an eine Empfangsvorrichtung 10 des mobilen Anzeigegerätes 6 übertragen.

Beispielsweise kann vorgesehen sein, dass die Sendestation 9 in Form eines WLAN-Routers ausgebildet ist, welcher in der Fertigungsanlage 1 angeordnet ist. Insbesondere kann hierbei vorgesehen sein, dass in der Fertigungsanlage 1 mehrere Sendestationen 9 ausgebildet sind, sodass innerhalb der Fertigungsanlage 1 lückenlos eine Übertragung der Daten zwischen dem zentralen Rechner 5 und den mobilen Anzeigegeräten 6 erreicht werden kann.

Weiters ist vorgesehen, dass das mobile Anzeigegerät 6 und/oder die Fertigungsmaschine 2 eine Zuordnungsvorrichtung 11 aufweist, mittels welchem das mobile Anzeigegerät 6 einer Fertigungsmaschine 2 zugeordnet werden kann, bzw. die Entfernung zwischen der Fertigungsmaschine 2 und dem mobilen Anzeigegerät 6 bestimmbar ist. Die Zuordnungsvorrichtung 11 kann auf verschiedenstes Arten realisiert sein.

Beispielsweise ist es denkbar, dass an der Fertigungsmaschine 2 ein Nähedetektionsmittel 12 angeordnet ist und dass am Anzeigegerät 6 ein Nähedetektionsmittel 13 angeordnet ist.

Die beiden Nähedetektionsmittel 12, 13 können beispielsweise in Form von NFC-Chips ausgebildet sein. Wenn sich das mobile Anzeigegerät 6 in einer Nahposition zu einer Fertigungsmaschine 2 befindet kann dieses mittels der Nähedetektionsmittel 12, 13 temporär dieser Fertigungsmaschine 2 zugeordnet werden. Hierbei ist es denkbar, dass die Zuordnung des Anzeigegerätes 6 zur Fertigungsmaschine 2 nur solange aufrecht erhalten bleibt, wie die Nähedetektionsmittel 12, 13 eine Verbindung zueinander aufweisen. Durch diese Maßnahme kann zusätzlich eine Sicherheitsfunktion realisiert werden, wodurch gewährleistet ist, dass die Maschinenbediener nur Daten von einer Fertigungsmaschine 2 ablesen können, wenn sie sich auch im Nahbereich oder Wirkbereich dieser Fertigungsmaschine 2 befinden.

In einem weiteren Ausführungsbeispiel ist es auch denkbar, dass zumindest an einigen der Fertigungsmaschinen 2 Nähedetektionsmittel 12 in Form von Bluetooth low energy (BLE) Beacons angeordnet sind. Das Nähedetektionsmittel 13 des Anzeigegerätes 6 kann somit durch einen Bluetooth-Sender realisiert sein. Eine derartige Bluetooth-Verbindung kann eine Reichweite von mehreren Metern aufweisen.

Weiters ist es auch denkbar, dass die Fertigungsanlage 1 derart konfiguriert ist, dass das mobile Anzeigegerät 6 trotz bestehender Verbindung zu einer Fertigungsmaschine 2 nur dann der Fertigungsmaschine 2 zugeordnet wird, wenn sich das mobile Anzeigegerät 6 innerhalb eines definierten Umkreises zur Fertigungsmaschine 2 befindet. Dies kann aus sicherheitstechnischen Gründen erforderlich sein.

Durch die Verwendung der beschriebenen Technologien NFC und BLE kann der Abstand des mobilen Anzeigegerätes 6 zur Fertigungsmaschine 2 erfasst werden. Befindet sich das Nähedetektionsmittel 13 des Anzeigegerätes 6 in der Reichweite von mehreren Nähedetektionsmitteln 12 von Fertigungsmaschinen 2, so kann durch Triangulation auch die räumliche Position des mobilen Anzeigegerätes 6 bestimmt werden.

Weiters ist es auch denkbar, dass bei Verwendung von Beacons derartige Beacons nicht auf jeder Fertigungsmaschine 2 angeordnet sind, sondern dass die Beacons in einem derartigen Abstand verteilt sind, sodass eine lückenlose Positionsbestimmung des mobilen Anzeigegerätes 6 ermöglicht wird.

Weiters kann vorgesehen sein, dass die Positionsbestimmung des mobilen Anzeigegerätes 6 unter Verwendung der Sendestation 9, beispielsweise des WLAN, bestimmt wird. Mittels der Auswertung der Signalstärke von verschiedenen Sendestationen 9 kann somit ebenfalls die absolute Position des mobilen Anzeigegerätes 6 in der Fertigungsanlage 1 bestimmt werden.

Im derartigen Ausführungsbeispiel dient die Empfangsvorrichtung 10 des mobilen Anzeigegerätes 6 gleichzeitig als Zuordnungsvorrichtung 11 beziehungsweise als Nähedetektionsmittel 13.

In wieder einem anderen Ausführungsbeispiel ist es auch denkbar, dass die absolute Position des mobilen Anzeigegerätes 6 mittels Beschleunigungssensoren, welche im mobilen Anzeigegerät 6 verbaut sind, bestimmt wird.

In wieder einer anderen Ausführungsvariante ist es auch denkbar, dass die einzelnen Anzeigegeräte 6 mittels einer Kombination der soeben beschriebenen Technologien in deren Position bestimmt werden. Beispielsweise ist es möglich, dass die Näherungssensoren, wie etwa NFC, BLE oder WLAN, zur Referenzierung der Position des mobilen Anzeigegerätes 6 verwendet werden und anschließend die Position des mobilen Anzeigegerätes 6 durch im mobilen Anzeigegerät 6 verbaute Beschleunigungssensoren verfolgt wird. In periodischen Zeitabständen bzw. bei Verfügbarkeit kann anschließend die Position des mobilen Anzeigegerätes 6 wieder referenziert werden. Durch diese Maßnahme kann die Positionsabweichung, welche aufgrund des Driftes der Beschleunigungssensoren im mobilen Anzeigegerät 6 entsteht, ausgeglichen werden.

Im Folgenden wird das Verfahren zum Betrieb der Fertigungsanlage 1 genauer beschrieben.

Mittels der Funktionssteuerung 3 werden die Zustandsdaten der Fertigungsmaschine 2 erfasst bzw. werden die Aktoren an der Fertigungsmaschine 2 mittels der Funktionssteuerung 3 gesteuert. Außerdem werden in periodischen oder auch in aktionsbasierten Zeitabständen die Zustandsdaten der Fertigungsmaschine 2 mittels dem Netzwerk 8 an den zentralen Rechner 5 übertragen.

Hierbei ist es denkbar, dass die Daten von der Funktionssteuerung 3 in Form von push-Datenpaketen aktiv an den zentralen Rechner 5 gesendet werden. In einer alternativen Ausführungsvariante ist es auch denkbar, dass der zentrale Rechner 5 die Daten in Form von pull-Datenpakten in periodischen Abständen von der Funktionssteuerung 3 abgefragt wird. In wieder einem anderen Modell ist es auch denkbar dass die Daten mittels der Polling-Methode übermittelt werden.

Im zentralen Rechner 5 werden die übermittelten Zustandsdaten der Fertigungsmaschinen 2 dazu herangezogen, um direkt im zentralen Rechner 5 eine Visualisierung der Zustandsdaten berechnen zu können. Hierbei kann vorgesehen sein, dass die Visualisierung der Zustandsdaten nur für jene Fertigungsmaschinen 2 berechnet wird, denen zum aktuellen Zeitpunkt ein mobiles Anzeigegerät 6 zugeordnet ist.

Alternativ dazu kann vorgesehen sein, dass für alle Fertigungsmaschinen 2 im zentralen Rechner 5 eine Visualisierung berechnet wird.

Die berechneten Visualisierungen werden anschließend mittels der Sendestation 9 auf die mobilen Anzeigegeräte 6 übertragen. Dabei wird die Visualisierung jener Fertigungsmaschine 2 auf das mobile Anzeigegerät 6 übertragen, zu welcher das mobile Anzeigegerät 6 zu diesem Zeitpunkt zugeordnet ist.

In einem ersten Ausführungsbeispiel ist es denkbar, dass die Visualisierung der Zustandsinformationen vom zentralen Rechner 5 auf das mobile Anzeigegerät 6 in Form eines Videostreams übertragen wird. Somit ist es denkbar, dass das mobile Anzeigegerät 6 keine Möglichkeit aufweist, um die Art der Visualisierung zu beeinflussen bzw. zu verändern.

In einem weiteren Ausführungsbeispiel ist es auch denkbar, dass am mobilen Anzeigegerät 6 Auswahlknöpfe vorhanden sind bzw. das Display 7 als Touchdisplay ausgeführt ist, sodass beispielsweise Untermenüs ausgewählt werden können, und somit verschiedene Arten von Visualisierungen für eine Fertigungsmaschine 2 im zentralen Rechner 5 berechnet werden können und am mobilen Anzeigegerät 6 ausgewählt werden können.

Bei derartigen Verfahren können beispielsweise handelsübliche Smartphones oder Tablets als mobiles Anzeigegerät 6 verwendet werden. Insbesondere kann vorgesehen sein, dass es nicht möglich ist, mit den mobilen Anzeigegerät 6 Steuerungsbefehle an die Fertigungsmaschine 2 abzugeben. Anstelle dessen wird das mobile Anzeigegerät 6 zur reinen Visualisierung der Zustandsdaten verwendet und die Eingabe von Steuerungsbefehlen in die Fertigungsmaschine 2 erfolgt mittels dem Eingabegerät 4.

Dadurch, dass die Berechnung und grafische Aufbereitung der Zustandsinformationen über die Fertigungsmaschine 2 nicht direkt am mobilen Anzeigegerät 6 erfolgt, sondern die Berechnung der Daten im zentralen Rechner 5 erfolgt, kann die Akkulaufzeit des mobilen Anzeigegerätes 6 verlängert werden.

In einer alternativen Ausführungsvariante ist es auch denkbar, dass das mobile Anzeigegerät 6 in Form eines speziellen Anzeige- und Eingabegerätes ausgebildet ist, welches auch Steuerungsknöpfe bzw. einen Not-Aus-Schalter aufweist. Ein derartiges Eingabegerät kann beispielsweise das Produkt KeTop der Firma KEBA sein. Durch ein derartiges mobiles Anzeigegerät 6 kann die Fertigungsmaschine 2 vom Maschinenbediener gesteuert werden, wobei gleichzeitig Visualisierungsdaten der Fertigungsmaschine 2 dem Maschinenbediener angezeigt werden können. Zur Steuerung der Fertigungsmaschine 2 mittels dem mobilen Anzeigegerät 6 kann vorgesehen sein, dass die Steuerungsbefehle direkt über die Nähedetektionsmittel 12, 13 an die Fertigungsmaschine 2 übermittelt werden. Dadurch kann erreicht werden, dass die Fertigungsmaschine 2 nur dann Steuerbefehle vom mobilen Anzeigegerät 6 empfängt, wenn sich dieses tatsächlich auch noch im Nahbereich der Fertigungsmaschine 2 befindet.

Der Betrieb der Fertigungsanlage 1 kann derart ablaufen, dass die Zustandsinformationen über die Fertigungsmaschinen 2 an den zentralen Rechner 5 übertragen werden und gegebenenfalls dort abgespeichert werden. Zusätzlich wird vom zentralen Rechner 5 überwacht, welche mobilen Anzeigegeräte 6 innerhalb der Fertigungsanlage 1 mit einer der Sendestationen 9 verbunden sind. Beim erstmaligen Verbinden des mobilen Anzeigegerätes 6 mit einer der Sendestationen 9 wird das mobile Anzeigegerät 6 identifiziert und gegebenenfalls Informationsdaten betreffend das mobile Anzeigegerät 6, wie etwa die Displaygröße und Displayauflösung an den zentralen Rechner 5 übertragen.

Wenn ein mobiles Anzeigegerät 6 in einen definierten Abstand zu einer der Fertigungsmaschinen 2 bewegt wird und sich somit in seinem Wirkbereich befindet, wird dies dem zentralen Rechner 5 signalisiert. Der zentrale Rechner 5 beginnt anschließend damit die Zustandsinformationen für diese Fertigungsmaschine 2 nicht nur abzuspeichern, sondern auch eine grafische Darstellung zu berechnen.

Die grafische Darstellung wird anschließend in einem Stream an jenes mobile Anzeigegerät 6 übermittelt, welches der Fertigungsmaschine 2 zugeordnet ist. Diese Übermittlung des Streames kann solange erfolgen, solange sich das mobile Anzeigegerät 6 im definierten Bereich der Fertigungsmaschine 2 befindet.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Fertigungsanlage
- 2: Fertigungsmaschine
- 3: Funktionssteuerung
- 4: Eingabegerät
- 5: zentraler Rechner
- 6: mobiles Anzeigegerät
- 7: Display
- 8: Netzwerk
- 9: Sendestation
- 10: Empfangsvorrichtung
- 11: Zuordnungsvorrichtung
- 12: Nähedetektionsmittel Fertigungsmaschine
- 13: Nähedetektionsmittel Anzeigegerät

## Patentansprüche

1. Verfahren zum Betreiben einer Fertigungsanlage (1) mit zumindest zwei Fertigungsmaschinen (2) mit jeweils einer Funktionssteuerung (3); zumindest einem zentralen Rechner (5), der mit der jeweiligen Funktionssteuerung (3) zur Datenübertragung gekoppelt ist;
zumindest eine Sendestation (9) zum Bereitstellen eines Drahtlosnetzwerkes in der Fertigungsanlage (1), wobei die Sendestation (9) mit dem zumindest einen zentralen Rechner (5) zur Datenübertragung gekoppelt ist;
zumindest ein mobiles Anzeigegerät (6) mit einem Display (7) und einer Empfangsvorrichtung (10) zum Empfang von Daten aus dem Drahtlosnetzwerk und zur grafischen Darstellung der empfangenen Daten,
wobei
- von den Funktionssteuerungen (3) der Fertigungsmaschinen (2) Zustandsinformationen über die Fertigungsmaschinen (2) an den zentralen Rechner (5) übertragen werden;
- eine Nahposition eines mobilen Anzeigegerätes (6) zu einer der Fertigungsmaschinen (2) detektiert wird, wodurch dieses mobile Anzeigegerät (6) zumindest temporär einer der Fertigungsmaschinen (2) zugeordnet wird;
- der zentrale Rechner (5) auf Basis der Zustandsinformationen über die Fertigungsmaschinen (2) zumindest für jene Fertigungsmaschine (2), der ein mobiles Anzeigegerät (6) zugeordnet ist, eine grafische Darstellung der Zustandsinformationen dieser Fertigungsmaschine (2) errechnet;
- die Daten der grafischen Darstellung der Zustandsinformationen mittels dem Drahtlosnetzwerk an das mobile Anzeigegerät (6) übertragen werden, welches der Fertigungsmaschine (2) zugeordnet ist, und am Display (7) des mobilen Anzeigegerätes (6) dargestellt werden, sodass die grafische Darstellung von einem Maschinenbediener abgelesen werden kann **dadurch gekennzeichnet,**
**dass** bei der Zuordnung eines mobilen Anzeigegerätes (6) zu einer der Fertigungsmaschinen (2) Informationen über das mobile Anzeigegerät (6) abgefragt und dem zentralen Rechner (5) übermittelt werden, wobei die Displaygröße und die Auflösung des Displays (7), sowie das Vorhandensein von Steuerelementen, wie einem Notaustaster und/oder Zustimmtaster, abgefragt werden, wobei der zentrale Rechner (5) auf Basis dieser ermittelten Anzeigegeräte-Information eine auf das mobile Anzeigegerät (6) angepasste grafische Darstellung ausgibt.

2. Verfahren nach Anspruch 1, **dadurch gekennzeichnet, dass** die Nahposition des mobilen Anzeigegerätes (6) zu einer der Fertigungsmaschinen (2) mittels einem Näherungssensor oder einem Datenübertragungsmittel mit begrenzter Reichweite, detektiert wird, wobei die Fertigungsmaschinen (2) ein entsprechendes Nähedetektionsmittel (12) und die mobilen Anzeigegeräte (6) ein entsprechendes Nähedetektionsmittel (13) aufweisen.

3. Verfahren nach Anspruch 2, **dadurch gekennzeichnet, dass** das Nähedetektionsmittel (12) an der Fertigungsmaschine (2) in Form eines Near Field Communication (NFC) - Sender ausgebildet ist und dass durch Ermittlung der Signalstärke des am mobilen Anzeigegerätes (6) empfangenen Signals ein Abstand des mobilen Anzeigegerätes (6) zum Nähedetektionsmittel (12) erfasst wird.

4. Verfahren nach Anspruch 2, **dadurch gekennzeichnet, dass** das Nähedetektionsmittel (12) an der Fertigungsmaschine (2) in Form eines Bluetooth - Beacons, wie etwa eines Bluetooth Low Energy (BLE) - Beacons ausgebildet ist und dass durch Ermittlung der Signalstärke des am mobilen Anzeigegerätes (6) empfangenen Signals ein Abstand des mobilen Anzeigegerätes (6) zum Nähedetektionsmittel (12) erfasst wird.

5. Verfahren nach Anspruch 3 oder 4, **dadurch gekennzeichnet, dass** an jeder der Fertigungsmaschinen (2) ein Nähedetektionsmittel (12) in Form eines Near Field Communication (NFC) - Senders oder in Form eines Bluetooth - Beacons angeordnet ist und dass das mobile Anzeigegerät (6) jener Fertigungsmaschine (2) zugeordnet wird, bei welcher das stärkste Signal zum mobilen Anzeigegerät (6) detektiert wird.

6. Verfahren nach einem der vorhergehenden Ansprüche, **dadurch gekennzeichnet, dass** vom Maschinenbediener, mittels einem der Fertigungsmaschine (2) zugeordneten Eingabegerät (4), Steuerungsbefehle in die Funktionssteuerung (3) eingegeben werden, wobei die Auswirkungen der eingegebenen Steuerungsbefehle in Echtzeit am mobilen Anzeigegerät (6) dargestellt werden.

7. Verfahren nach einem der vorhergehenden Ansprüche, **dadurch gekennzeichnet, dass** der Maschinenbediener am mobilen Anzeigegerät (6) angemeldet bzw. identifiziert ist und dass bei der Zuordnung eines mobilen Anzeigegerätes (6) zu einer der Fertigungsmaschinen (2), Informationen über den Maschinenbediener abgefragt und dem zentralen Rechner (5) übermittelt werden, wobei der zentrale Rechner (5) auf Basis der Identifizierung des Maschinenbedieners eine auf das mobile Anzeigegerät (6) angepasste grafische Darstellung ausgibt.

8. Verfahren nach einem der vorhergehenden Ansprüche, **dadurch gekennzeichnet, dass** bei Vorhandensein von bestimmten Steuerelementen am mobilen Anzeigegerät (6), dieses auch zur Übertragung von Steuerinformationen an die Funktionssteuerung (3) der Fertigungsmaschine (2) dient.

9. Verfahren nach Anspruch 8, **dadurch gekennzeichnet, dass** die Steuerinformationen mittels dem Datenübertragungsmittel mit begrenzter Reichweite direkt vom mobilen Anzeigegerät (6) auf die Fertigungsmaschine (2) übertragen werden.

10. Verfahren nach einem der vorhergehenden Ansprüche, **dadurch gekennzeichnet, dass** in dem zumindest einen zentralen Rechner (5) die grafische Darstellung der Zustandsinformationen von nur jenen Fertigungsmaschinen (2) errechnet wird, welchen zu diesem Zeitpunkt ein mobiles Anzeigegerät (6) zur Darstellung der Zustandsinformationen zugeordnet ist.

11. Verfahren nach einem der vorhergehenden Ansprüche, **dadurch gekennzeichnet, dass** das Display (7) des mobilen Anzeigegerätes (6) ein Touch-Display ist auf welchem Eingabebuttons dargestellt werden, wobei bei Betätigen eines der Eingabebuttons mittels dem Drahtlosnetzwerk ein Befehl von dem mobilen Anzeigegerät (6) auf den zentralen Rechner (5) übertragen wird und die grafische Darstellung der Zustandsinformationen über die Fertigungsmaschine (2) angepasst wird, wodurch beispielsweise Untermenüs geöffnet werden können oder die Darstellung geändert werden kann.

12. Verfahren nach einem der vorhergehenden Ansprüche, **dadurch gekennzeichnet, dass** die Rechenleistung des zentralen Rechners (5) priorisiert zur Berechnung der grafischen Darstellung der Zustandsinformationen der Fertigungsmaschinen (2) verwendet wird und dass bei überschüssiger Rechenleistung der zentrale Rechner (5) auch für andere Rechenaufgaben herangezogen wird.

13. Verfahren nach einem der vorhergehenden Ansprüche, **dadurch gekennzeichnet, dass** die Zustandsinformationen über die Fertigungsmaschinen (2) in festgelegten Zeitintervallen an den zentralen Rechner (5) übertragen werden.

14. Fertigungsanlage (1) umfassend:
zumindest zwei Fertigungsmaschinen (2) mit jeweils einer Funktionssteuerung (3);
zumindest einen zentralen Rechner (5), der mit der jeweiligen Funktionssteuerung (3) zumindest zur einseitigen Datenübertragung gekoppelt ist;
zumindest eine Sendestation (9) zum Bereitstellen eines Drahtlosnetzwerkes in der Fertigungsanlage (1), wobei die Sendestation (9) mit dem zumindest einen zentralen Rechner (5) zumindest zur einseitigen Datenübertragung gekoppelt ist;
zumindest ein mobiles Anzeigegerät (6) mit einer Empfangsvorrichtung (10) zum Empfang von Daten aus dem Drahtlosnetzwerk und zur grafischen Darstellung der empfangenen Daten,
wobei das mobile Anzeigegerät (6) und/oder die Fertigungsmaschinen (2) eine Zuordnungsvorrichtung (11) aufweist, mittels welcher das mobile Anzeigegerät (6) einer bestimmten Fertigungsmaschine (2) zuordenbar ist
**dadurch gekennzeichnet, dass** die Fertigungsanlage (1) derart ausgebildet ist, dass bei der Zuordnung eines mobilen Anzeigegerätes (6) zu einer der Fertigungsmaschinen (2) Informationen über das mobile Anzeigegerät (6) abgefragt und dem zentralen Rechner (5) übermittelt werden können, wobei die Displaygröße und die Auflösung des Displays (7), sowie das Vorhandensein von Steuerelementen, wie einem Notaustaster und/oder Zustimmtaster, abgefragt werden können, wobei der zentrale Rechner (5) auf Basis dieser ermittelten Anzeigegeräte-Information eine auf das mobile Anzeigegerät (6) angepasste grafische Darstellung ausgeben kann.

## Claims

1. A method for operating a manufacturing plant (1) having
at least two production machines (2) each with a function controller (3);
at least one central computer (5) coupled to the respective function controller (3) for data transmission;
at least one transmitting station (9) for providing a wireless network in the manufacturing plant (1), wherein the transmitting station (9) is coupled to the at least one central computer (5) for data transmission;
at least one mobile display device (6) having a display (7) and a receiving device (10) for receiving data from the wireless network and for graphically displaying the received data,
wherein
- status information about the manufacturing machines (2) is transmitted to the central computer (5) by the functional controllers (3) of the manufacturing machines (2);
- a close position of a mobile display device (6) to one of the manufacturing machines (2) is detected, whereby this mobile display device (6) is at least temporarily assigned to one of the manufacturing machines (2);
- the central computer (5) calculates, on the basis of the status information about the production machines (2), a graphical representation of the status information of this production machine (2) at least for that production machine (2) to which a mobile display device (6) is assigned;
- the data of the graphical representation of the status information is transmitted by means of the wireless network to the mobile display device (6) which is assigned to the production machine (2) and are shown on the display (7) of the mobile display device (6), such that the graphical representation can be read by a machine operator **characterized in that**
when a mobile display device (6) is assigned to one of the production machines (2), information about the mobile display device (6) is retrieved and transmitted to the central computer (5), wherein the display size and the resolution of the display (7), and the presence of control elements, such as an emergency stop button and/or enabling button, are retrieved, wherein the central computer (5) outputs a graphical representation adapted to the mobile display device (6) on the basis of this determined display device information.

2. The method according to claim 1, **characterized in that** the close position of the mobile display device (6) to one of the production machines (2) is detected by means of a proximity sensor or a data transmission means with a limited range, wherein the production machines (2) comprise a corresponding proximity detection means (12) and the mobile display devices (6) comprise a corresponding proximity detection means (13).

3. The method according to claim 2, **characterized in that** the proximity detection means (12) is formed on the production machine (2) in the form of a near field communication (NFC) transmitter, and that a distance of the mobile display device (6) from the proximity detection means (12) is detected by determining the signal strength of the signal received at the mobile display device (6).

4. The method according to claim 2, **characterized in that** the proximity detection means (12) is formed on the production machine (2) in the form of a Bluetooth beacon, such as a Bluetooth low energy (BLE) beacon, and that a distance of the mobile display device (6) from the proximity detection means (12) is detected by determining the signal strength of the signal received at the mobile display device (6).

5. The method according to claim 3 or 4, **characterized in that** a proximity detection means (12) in the form of a Near Field Communication (NFC) transmitter or in the form of a Bluetooth beacon is arranged at each one of the production machines (2) and that the mobile display device (6) is assigned to that production machine (2) at which the strongest signal to the mobile display device (6) is detected.

6. The method according to one of the preceding claims, **characterized in that** control commands are entered into the function control (3) by the machine operator by means of an input device (4) assigned to the production machine (2), wherein the effects of the entered control commands are displayed in real time on the mobile display device (6).

7. The method according to one of the preceding claims, **characterized in that** the machine operator is logged on to and/or identified on the mobile display device (6) and that when a mobile display device (6) is assigned to one of the production machines (2), information about the machine operator is retrieved and transmitted to the central computer (5), wherein the central computer (5) outputs a graphic representation adapted to the mobile display device (6) on the basis of the identification of the machine operator.

8. The method according to one of the preceding claims, **characterized in that** if certain control elements are present on the mobile display device (6), it also serves to transmit control information to the function controller (3) of the production machine (2).

9. The method according to claim 8, **characterized in that** the control information is transmitted directly from the mobile display device (6) to the manufacturing machine (2) by means of the data transmission means with a limited range.

10. The method according to one of the preceding claims, **characterized in that** in the at least one central computer (5) the graphical representation of the status information of only those production machines (2) is calculated, to which a mobile display device (6) is assigned at this time for representing the status information.

11. The method according to one of the preceding claims, **characterized in that** the display (7) of the mobile display device (6) is a touch display on which input buttons are displayed, wherein, when one of the input buttons is actuated, a command is transmitted from the mobile display device (6) to the central computer (5) by means of the wireless network and the graphical representation of the status information about the production machine (2) is adapted, whereby, for example, submenus can be opened or the representation can be changed.

12. The method according to one of the preceding claims, **characterized in that** the computing power of the central computer (5) is used in a prioritized manner for calculating the graphical representation of the status information of the production machines (2) and that, in case of excess computing power, the central computer (5) is also used for other computing tasks.

13. The method according to one of the preceding claims, **characterized in that** the status information about the production machines (2) is transmitted to the central computer (5) at fixed time intervals.

14. A manufacturing plant (1) comprising:
at least two production machines (2) each with a function controller (3);
at least one central computer (5) coupled to the respective function controller (3) at least for unilateral data transmission;
at least one transmitting station (9) for providing a wireless network in the manufacturing plant (1), wherein the transmitting station (9) is coupled to the at least one central computer (5) for unilateral data transmission;
at least one mobile display device (6) having a receiving device (10) for receiving data from the wireless network and for graphically displaying the received data,
wherein the mobile display device (6) and/or the production machines (2) has/have an assignment device (11) by means of which the mobile display device (6) can be assigned to a specific production machine (2),
**characterized in that** the manufacturing plant (1) is designed in such a way that, when a mobile display device (6) is assigned to one of the production machines (2), information about the mobile display device (6) can be retrieved and transmitted to the central computer (5), wherein the display size and the resolution of the display (7), and the presence of control elements, such as an emergency stop button and/or enabling button, can be retrieved, wherein the central computer (5) can output a graphical representation adapted to the mobile display device (6) on the basis of this determined display device information.

## Revendications

1. Procédé d'exploitation d'une installation de fabrication (1) avec
au moins deux machines de fabrication (2) chacune avec un contrôle de fonctionnement (3) ;
au moins un ordinateur central (5) qui est couplé avec le contrôle de fonctionnement (3) pour la transmission des données ;
au moins une station d'émission (9) pour la mise à disposition d'un réseau sans fil dans l'installation de fabrication (1), dans lequel la station d'émission (9) est couplée avec l'au moins un ordinateur central (5) pour la transmission des données ;
au moins un appareil d'affichage mobile (6) avec un écran (7) et un dispositif de réception (10) pour la réception de données provenant du réseau sans fil et pour la représentation graphique des données reçues,
dans lequel
- des informations d'état concernant les machines de fabrication (2) sont transmises par les contrôles de fonctionnement (3) des machines de fabrication (2) à l'ordinateur central (5) ;
- une position proche d'un appareil d'affichage mobile (6) par rapport à une des machines de fabrication (2) est détectée, ce qui permet de faire correspondre au moins temporairement cet appareil d'affichage mobile (6) à une des machines de fabrication (2) ;
- l'ordinateur central (5) calcule, sur la base des informations d'état concernant les machines de fabrication (2), au moins pour la machine de fabrication (2) à laquelle correspond un appareil d'affichage mobile (6), une représentation graphique des informations d'état de cette machine de fabrication (2) ;
- les données de la représentation graphique des informations d'état sont transmises au moyen du réseau sans fil à l'appareil d'affichage mobile (6) qui correspond à la machine de fabrication (2) et sont représentées sur l'écran (7) de l'appareil d'affichage mobile (6), de façon à ce que la représentation graphique puisse être lue par un opérateur de machines
**caractérisé en ce que**
lors de l'attribution d'un appareil d'affichage mobile (6) à une des machines de fabrication (2), des informations concernant l'appareil d'affichage mobile (6) sont lues et transmises à l'ordinateur central (5), dans lequel la taille de l'écran et la résolution de l'écran (7) ainsi que la présence d'éléments de contrôle, tel qu'un bouton d'arrêt d'urgence et/ou un bouton de validation, sont lues, dans lequel l'ordinateur central (5) génère, sur la base de ces informations d'appareil d'affichage déterminées, une représentation graphique adaptée à l'appareil d'affichage mobile (6).

2. Procédé selon la revendication 1, **caractérisé en ce que** la position proche de l'appareil d'affichage mobile (6) par rapport à une des machines de fabrication (2) est détectée au moyen d'un capteur de proximité ou d'un moyen de transmission de données avec une portée limitée, dans lequel les machines de fabrication (2) comprennent un moyen de détection de proximité (12) et les appareils d'affichage mobiles (6) comprennent un moyen de détection de proximité (13) correspondant.

3. Procédé selon la revendication 2, **caractérisé en ce que** le moyen de détection de proximité (12) sur la machine de fabrication (2) est conçu sous la forme d'un émetteur Near Field Communication (NFC) et **en ce que** la détermination de l'intensité du signal reçu au niveau de l'appareil d'affichage mobile (6) permet de mesurer une distance entre l'appareil d'affichage mobile (6) et le moyen de détection de proximité (12).

4. Procédé selon la revendication 2, **caractérisé en ce que** le moyen de détection de proximité (12) sur la machine de fabrication (2) est conçu sous la forme d'une balise Bluetooth, par exemple une balise Bluetooth Low Energy (BLE) et **en ce que** la détermination de l'intensité du signal reçu au niveau de l'appareil d'affichage mobile (6) permet de mesurer une distance entre l'appareil d'affichage mobile (6) et le moyen de détection de proximité (12).

5. Procédé selon la revendication 3 ou 4, **caractérisé en ce que**, au niveau de chacune des machines de fabrication (2), est disposé un moyen de détection de proximité (12) sous la forme d'un émetteur Near Field Communication (NFC) ou sous la forme d'une balise Bluetooth et **en ce que** l'appareil d'affichage mobile (6) correspond à la machine de fabrication (2) dans laquelle le signal le plus fort vers l'appareil d'affichage mobile (6) est détecté.

6. Procédé selon l'une des revendications précédentes, **caractérisé en ce que** l'opérateur de la machine entre, au moyen d'un appareil d'entrée (4) correspondant à la machine de fabrication (2), des instructions de commande dans le contrôle de fonctionnement (3), dans lequel les effets des instructions de commande entrées sont représentées en temps réel sur l'appareil d'affichage mobile (6).

7. Procédé selon l'une des revendications précédentes, **caractérisé en ce que** l'opérateur de la machine est identifié sur l'appareil d'affichage mobile (6) et **en ce que**, lors de l'attribution d'un appareil d'affichage mobile (6) à une des machines de fabrication (2), des informations concernant l'opérateur de la machine sont lues et transmises à l'ordinateur central (5), dans lequel l'ordinateur central (5) génère, sur la base de l'identification de l'opérateur de la machine, une représentation graphique adaptée à l'appareil d'affichage mobile (6).

8. Procédé selon l'une des revendications précédentes, **caractérisé en ce que**, lors de la présence d'éléments de commande déterminés au niveau de l'appareil d'affichage mobile (6), celui-ci sert également à la transmission d'informations de commande au contrôle de fonctionnement (3) de la machine de fabrication (2).

9. Procédé selon la revendication 8, **caractérisé en ce que** les informations de contrôle sont transmises, à l'aide du moyen de transmission de données à portée limitée, directement de l'appareil d'affichage mobile (6) à la machine de fabrication (2).

10. Procédé selon l'une des revendications précédentes, **caractérisé en ce que**, dans l'au moins un ordinateur central (5), la représentation graphique des informations d'état est calculée uniquement par les machines de fabrication (2), auxquelles, à ce moment, correspond un appareil d'affichage mobile (6) pour la représentation des informations d'état.

11. Procédé selon l'une des revendications précédentes, **caractérisé en ce que** l'écran (7) de l'appareil d'affichage mobile (6) est un écran tactile sur lequel des boutons d'entrée sont représentés, dans lequel, lors de l'actionnement d'un des boutons d'entrée, une instruction est transmise, au moyen du réseau sans fil, par l'appareil d'affichage mobile (6) à l'ordinateur central (5) et la représentation graphique des informations d'état concernant la machine de fabrication (2) est adaptée, ce qui permet d'ouvrir, par exemple, des sous-menus ou de modifier la représentation.

12. Procédé selon l'une des revendications précédentes, **caractérisé en ce que** la puissance de calcul de l'ordinateur central (5) est utilisée de manière priorisée pour le calcul de la représentation graphique des informations d'état des machines de fabrication (2) et **en ce que**, dans le cas d'une puissance de calcul en excès, l'ordinateur central (5) est utilisé également pour d'autres tâches de calcul.

13. Procédé selon l'une des revendications précédentes, **caractérisé en ce que** les informations d'état concernant les machines de fabrication (2) sont transmises à l'ordinateur central (5) à des intervalles déterminés.

14. Installation de fabrication (1), comprenant :
au moins deux machines de fabrication (2) chacune avec un contrôle de fonctionnement (3) ;
au moins un ordinateur central (5) qui est couplé avec le contrôle de fonctionnement (3) pour la transmission des données ;
au moins une station d'émission (9) pour la mise à disposition d'un réseau sans fil dans l'installation de fabrication (1), dans lequel la station d'émission (9) est couplée avec l'au moins un ordinateur central (5) au moins pour la transmission unidirectionelle des données ;
au moins un appareil d'affichage mobile (6) avec un dispositif de réception (10) pour la réception de données provenant du réseau sans fil et pour la représentation graphique des données reçues,
dans lequel l'appareil d'affichage mobile (6) et/ou les machines de fabrication (2) comprend un dispositif d'attribution (11) au moyen duquel l'appareil d'affichage mobile (6) peut être attribué à une machine de fabrication (2) déterminée,
**caractérisée en ce que** l'installation de fabrication (1) est conçue de façon à ce que, lors de l'attribution d'un appareil d'affichage mobile (6) à une des machines de fabrication (2), des informations concernant l'appareil d'affichage mobile (6) peuvent être lues et transmises à l'ordinateur central (5), dans lequel la taille de l'écran et la résolution de l'écran (7), ainsi que la présence d'éléments de commande, tels qu'un bouton d'arrêt d'urgence et/ou un bouton de validation, peuvent être lues, dans lequel l'ordinateur central (5) peut générer, sur la base de ces informations concernant l'appareil d'affichage, une représentation graphique adaptée à l'appareil d'affichage mobile (6).
